(19) Europäisches Patentamt
European Patent Office
Office européen des brevets

(11) **EP 2 084 794 B1**

(12) **EUROPÄISCHE PATENTSCHRIFT**

(45) Veröffentlichungstag und Bekanntmachung des Hinweises auf die Patenterteilung:
**04.07.2018  Patentblatt 2018/27**

(21) Anmeldenummer: **07819159.0**

(22) Anmeldetag: **19.10.2007**

(51) Int Cl.:
*H01S 3/08* (2006.01)     *H01S 3/105* (2006.01)
*H01S 3/106* (2006.01)     *H01S 3/081* (2006.01)
*H01S 3/042* (2006.01)     *H01S 3/16* (2006.01)
*H01S 3/23* (2006.01)     *G02F 1/37* (2006.01)

(86) Internationale Anmeldenummer:
**PCT/EP2007/009094**

(87) Internationale Veröffentlichungsnummer:
**WO 2008/046644 (24.04.2008 Gazette 2008/17)**

(54) **ANORDUNG MIT EINEM FESTSTEHENDEN FESTKÖRPERMEDIUM**

ARRANGEMENT WITH A FIXED SOLID-STATE MEDIUM

AGENCEMENT COMPRENANT UN MILIEU À CORPS SOLIDE FIXE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **20.10.2006  DE 102006050466**
**15.01.2007  DE 102007002888**

(43) Veröffentlichungstag der Anmeldung:
**05.08.2009  Patentblatt 2009/32**

(73) Patentinhaber: **Fraunhofer-Gesellschaft zur Förderung der angewandten Forschung e.V. 80686 München (DE)**

(72) Erfinder:
• **RUSSBÜLDT, Peter**
**52355 Düren (DE)**

• **HOFFMANN, Dieter**
**52152 Simmerath (DE)**

(74) Vertreter: **Grimm, Ekkehard**
**Edith-Stein-Strasse 22**
**63075 Offenbach/Main (DE)**

(56) Entgegenhaltungen:
**US-A- 5 233 624     US-A- 5 280 491**
**US-A- 5 757 842     US-B1- 6 888 855**

• **WYSS C ET AL: "MODULATION AND SINGLE-SPIKE SWITCHING OF A DIODE-PUMPED ER3+:LIYF4 LASER AT 2.8 MUM" IEEE JOURNAL OF QUANTUM ELECTRONICS, IEEE SERVICE CENTER, PISCATAWAY, NJ, USA, Bd. 34, Nr. 6, 1. Juni 1998 (1998-06-01), Seiten 1041-1045, XP000765506 ISSN: 0018-9197**

**Beschreibung**

Die vorliegende Erfindung betrifft eine Anordnung mit einem feststehenden Festkörpermedium, das über eine Pumpeinrichtung mittels Pumpstrahlung gepumpt wird, wobei die Pumpstrahlung über eine Ablenkeinrichtung in das Festkörpermedium eingestrahlt wird, gemäß dem Oberbegriff des Anspruchs 1. Eine solche Anordnung ist aus US 6 888 855 B1 und US 5 233 624 A1 bekannt.

Verstärkungsmedien, vor allem solche mit einer hohen Sättigungsintensität, z.B. 3-Niveau-Verstärkungsmedien oder breitbandige Verstärkungsmedien, werden für eine hohe Verstärkung und Lasereffizienz mit einer großen Leistungsdichte gepumpt. Nichtlineare Medien, z.B. für die Frequenzkonversion und Frequenzmischung, müssen für eine hohe Effizienz ebenfalls mit einer hohen Leistungsdichte gepumpt werden. Die Verlustwärme in Festkörper-Lasermedien oder nichtlinearen Kristallen verursacht thermisch induzierte mechanische Spannungen und einen Brechungsindexgradienten durch einen temperaturabhängigen Brechungsindex und Spannungsdoppelbrechung. Thermisch induzierte Spannungsbrüche und thermische Linse und Phasenaberrationen durch den Brechungsindexgradienten, die nur sehr schwer korrigiert werden können, begrenzen die Leistungsdichte im Laser- oder nichtlinearen Medium. Leistung und Strahlungsdichte von Festkörperlasern oder bei der nichtlinearen Frequenzkonversion werden durch die thermische Belastung maßgeblich limitiert.

Da die Wärmeleitfähigkeit von Festkörpermedien begrenzt ist, sind eine Erwärmung durch den Laserprozess oder Absorption und damit Temperaturgradienten unvermeidbar. Die Temperaturen und Temperaturgradienten lassen sich durch einen kleineren Wärmeeintrag (kleine Absorption, kleiner Quantendefekt), durch eine Erhöhung der Wärmeleitfähigkeit durch Kryo-Kühlung (Ti:Saphir), durch eine Bewegung des gepumpten Festkörpers oder eine Vergrößerung der die Wärme abführenden Fläche und durch Verringerung des Wärmetransportweges (Slab- und Scheibenlaser) verkleinern. Die Wirkung des Temperaturgradienten auf die Strahlung (thermische Linse) kann durch eine geeignete Geometrie von Strahlungsausbreitung und Wärmefluss (Stab-Geometrie und ScheibenLaser) oder durch Kompensationsanordnungen z.B. von mehreren Laserstäben zur Kompensation der Doppelbrechung minimiert werden. Eine thermische Linse und andere Aberrationen (z. B. sphärische Aberration) können auch außerhalb des Verstärkungsmediums/nichtlinearen Mediums durch Phasenkonjugation durch z.B. SBS-Zellen (SBS: Stimulierte Brillouin Streuung) oder adaptive Optiken kompensiert werden. Muss ein Festkörpermedium, z. B. ein Laserkristall oder ein nichtlinearer Kristall, mit einer großen Leistungsdichte gepumpt werden und verursacht diese Pumpstrahlung einen großen Wärmeeintrag in das Festkörpermedium bzw. ist die Wärmeleitfähigkeit des Festkörpermediums klein, so können alle bisherigen Methoden - Kryo-Kühlung und Bewegung des gepumpten Körpers ausgenommen - nicht den damit verbundenen großen Temperaturgradienten vermeiden.

Die Kryo-Kühlung von Ti:Saphir verkleinert tatsächlich die Temperaturgradienten durch eine Erhöhung der thermischen Leitfähigkeit und ermöglicht trotz großem Wärmeeintrag sehr kleine gepumpte Volumen. Die Kryo-Kühlung ist aber aufwendig und nur bedingt skalierbar. Auch die Bewegung des gepumpten Festkörpers verteilt die Wärmekapazität des Festkörpers über ein größeres Volumen und verkleinert die absolute Temperaturerhöhung und Temperaturgradienten. Der mechanische Aufwand für die Bewegung des gepumpten Festkörpermediums und dessen Kühlung ist aber aufwendig und konnte bisher nicht zufrieden stellend gelöst werden. Die anderen genannten Verfahren beschränken sich entweder auf eine Transformation des gepumpten Volumens in eine flächige Verteilung mit besserer Wärmeabfuhr (Scheibe/Slab), die aber immer mit einer Vergrößerung des gepumpten Volumens verbunden ist, oder auf eine nachträgliche Kompensation des schädlichen Einflusses des Temperaturgradienten auf die optische Strahlung (Phasenkonjugation).

Der vorliegenden Erfindung liegt die Aufgabe zugrunde, thermische Effekte von optisch gepumpten Lasermedien und nichtlinearen Medien, bei hohen mittleren Leistungsdichten, zu verringern.

Die US-A-5 233 624 zeigt ein Lasersystem mit gepumptem Festkörpermedium. Durch das Pumpen wird eine Populations-Inversion in zumindest einem Bereich des Lasermediums erzielt, wobei der Laserstrahl kleiner ist als der Querschnitt des Lasermediums. Weiterhin sind Einrichtungen vorhanden, um den Laserstrahl durch den populationsinvertierten Bereich des Lasermediums schweifen zu lassen. Das Lasermedium befindet sich zwischen zwei Spiegeln, wobei der eine ein Auskoppelspiegel ist. Durch diesen Aufbau wird der aktive Bereich durch das nicht benutzte, aber gepumpte Festkörpermedium bewegt. Dadurch wird eine erhöhte Wiederholungsrate mit maximaler Peakpulsleistung erreicht.

Die US-B1-6 888 855 beschreibt eine Laseranordnung mit einem optischen System. Der Laserstrahl geht durch ein Material hindurch oder wird von der Oberfläche eines Materials reflektiert, das am Licht von begrenzter Haltbarkeit ist. Um die Lebensdauer des Lasers oder des optischen Systems zu erhöhen, wird der Lichtpunkt über das Material bewegt, so dass mehr als nur ein einzelner Punkt des gleichen Materials verwendet wird.

Gelöst wird diese Aufgabe durch eine Anordnung mit den Merkmalen des Anspruchs 1. Durch die erfindungsgemäße Anordnung wird der Wärmeeintrag in das gepumpte Festkörpermedium durch eine schnelle Bewegung des gepumpten Volumens über ein großes Volumen verteilt und so werden die auftretenden Temperaturgradienten verkleinert. Das Festkörpermedium kann zum Beispiel ein Laser- oder ein Nichtlineares Medium sein. Bei der Bewegung des gepumpten Volumens kann es sich um einfache Bewegungen, wie Translation oder Rotation, handeln, aber auch um kompliziertere Bewegungen wie z.B. Spiralbahnen, Lissajous-Figuren, Raster oder ähnliches. Bevorzugt wird eine Rotationsbewegung auf einer Kreisbahn durchgeführt; hierbei handelt es sich um eine technisch einfache Lösung mit dem Vorteil einer konstanten Ablenkgeschwindigkeit. Komplexere Bahnen ermöglichen dagegen eine bessere Ausnutzung des Festkörpermediums hinsichtlich einer Vergrößerung des erwärmten Volumens und damit einer weiteren Reduktion von Temperaturen und Gradienten. Zur Vereinfachung wird im Folgenden beispielhaft eine Rotation angenommen. Durch die Bewegung des gepumpten Volumens wird die Wärmeabfuhr erleichtert und die Temperatur-Gradienten und Absolut-Temperaturen werden verkleinert. Die vorteilhafte Ablenkgeschwindigkeit und die Ablenkrate sind abhängig von den Abmessungen des gepumpten Volumens, der eingebrachten Wärme und den thermischen Zeitkonstanten des Materials. Die erforderliche Ablenkrate steigt mit kleineren thermischen Zeitkonstanten des Festkörpermediums. Im Allgemeinen wird eine möglichst große Ablenkrate im Bereich von zehn bzw. einigen zehn bis einigen hundert Hertz vorteilhaft sein. Bei diesen Ablenkraten ergibt sich eine Verkleinerung der thermischen Gradienten und eine Verringerung der Temperaturen im Lasermedium, sofern die minimale angegebene Ablenkgeschwindigkeit nicht unterschritten wird. Eine Reduktion von Verstärkung und Lasereffizienz ergibt sich, sofern die maximale Ablenkgeschwindigkeit überschritten wird. Dies gilt allerdings nur für den kontinuierlich gepumpten Betrieb. Im gepulst gepumpten Betrieb können auch höhere Ablenkgeschwindigkeiten vorteilhaft sein.

Durch eine Vergrößerung des Festkörpervolumens und des gescannten Bereiches ist das Verfahren prinzipiell auf beliebig große mittlere Leistungen skalierbar. Im Fall von Festkörpermedien mit Speichereffekten (zum Beispiel Fluoreszenzlebensdauer von Laserkristallen) ergibt sich eine maximale sinnvolle Ablenkgeschwindigkeit. Vorteilhafte Ablenkgeschwindigkeiten sind kleiner als ca. der Quotient aus Strahldurchmesser und Zeitkonstante.

Der Ansatz der Bewegung des gepumpten Volumens im Verstärkungs- bzw. nichtlinearen Medium, um den Wärmeeintrag über ein großes Volumen zu verteilen, ist an sich nicht neu und wird auch in jüngster Zeit diskutiert, jedoch wird bei allen bisherigen Ansätzen nicht das gepumpte Volumen im Lasermedium/nichtlinearen Medium bewegt, sondern das Medium um den feststehenden Pumpstrahl. Ein feststehendes gepumptes Medium kann viel leichter gekühlt werden als ein bewegtes Medium. Ein schnelles Scannen des gepumpten Volumens ist technisch wesentlich einfacher realisierbar als eine präzise Bewegung des gepumpten Mediums. Die Polarisation dreht sich nicht relativ zu der Orientierung des Verstärkungs- und nichtlinearen Mediums, was die Verwendung mehrachsiger Kristallmedien ermöglicht (z. B. zur Frequenzkonversion). Durch eine geeignete Abbildung besitzen Abweichungen von einer idealen Scanbewegung keinen Einfluss auf den Strahlverlauf außerhalb der Anordnung.

In einer Ausführungsform wird das gepumpte Volumen über einen Scanner durch das Verstärkungsmedium/nichtlineare Medium bewegt, während das Festkörpermedium ortsfest verbleibt. Bei allen ähnlichen Vorschlägen wird bisher nicht das gepumpte Volumen bewegt, sondern das Festkörpermedium. Das hat den Nachteil, dass die Wärme aus dem Festkörper nur schwer abgeführt werden kann und die präzise Bewegung eines Lasermediums oder nichtlinearen Mediums aufwendig ist.

Die beliebige Scanbewegung bewirkt eine Winkelablenkung, die durch eine Abbildungsoptik (z. B. Abstand f, Linse mit Brennweite f, Abstand f) in eine Translation innerhalb des Festkörpermediums umgewandelt wird. Die Abbildung ist so ausgelegt, dass ein erneutes Durchlaufen einer baugleichen Optik oder durch Reflexion an einem Spiegel eine Rücktransformation eine Winkelablenkung bewirkt. Durch Ablenkung durch denselben bzw. einen zweiten, baugleichen Scanner wird die Strahlablenkung durch den Scanner rückgängig gemacht. Durch die Abbildung wird erreicht, dass jeder beliebige auf den Scanner treffende Strahl, unabhängig von der transversalen Strahllage, bei der erneuten Ablenkung durch den Scanner eine vom Scanner unabhängige Strahlausbreitungsrichtung besitzt, was einer telezentrischen Abbildung der beiden Scanner aufeinander entspricht. Der gesamte Aufbau verhält sich daher (ohne thermische Linse im Festkörpermedium) wie ein Spiegel bzw. wie eine unendlich dünne Platte. Sowohl die Pumpstrahlung als auch die Signalstrahlung können beliebig häufig über diesen virtuellen Spiegel bzw. durch die unendlich dünne Platte gefaltet werden, um das Signal zu verstärken.

In einer Ausgestaltung der Anordnung wird die Beibehaltung der Ausbreitungsrichtung zumindest der Laserstrahlung durch eine zwischen Ablenkeinrichtung und Festkörpermedium angeordnete, erste Optik vorgenommen wird.

Bevorzugt wird die Ablenkeinrichtung durch einen bewegten Spiegel (Scanner) gebildet. Die durch das Festkörpermedium hindurchgeführte Strahlung kann über einen Reflektor in das Festkörpermedium zurückführt werden.

Eine solche Anordnung mit einem bewegten Spiegel (Scanner) und einem Reflektor sollte sich, am Ort der Ablenkeinrichtung gesehen, wie eine Strahltransfermatrix verhalten, die charakterisiert ist durch

$$\begin{pmatrix} -1 & 0 \\ C & -1 \end{pmatrix}$$

für eine Reflexion mit Strahlinversion,

wobei C beliebig gewählt werden kann.

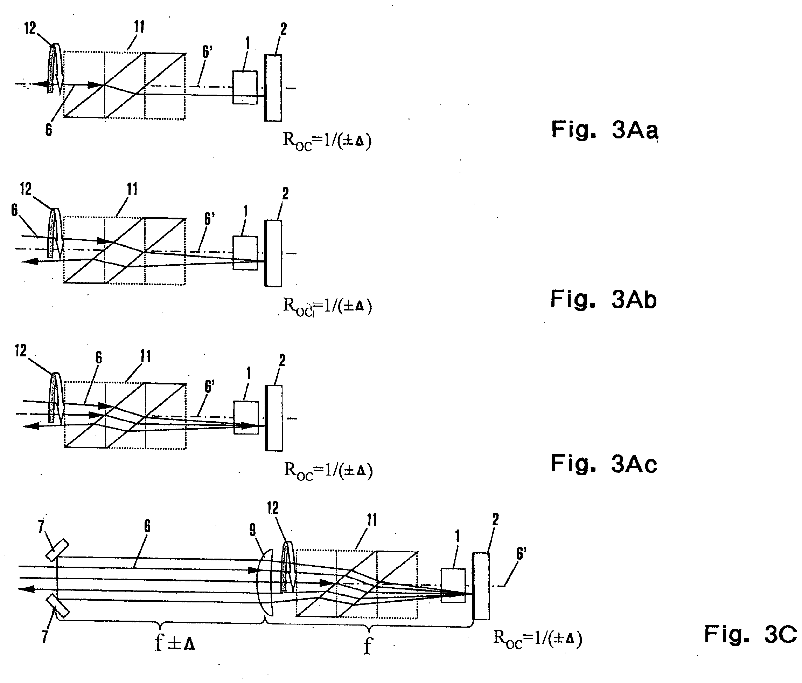

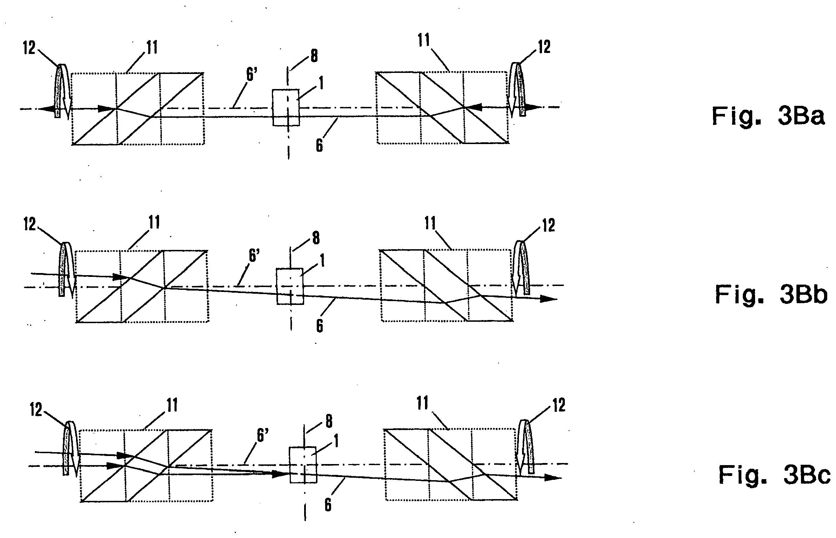

Außer durch einen Scanner zur Winkelablenkung kann eine Strahlablenkung im Festkörpermedium auch durch andere Vorrichtungen, beispielsweise eine beliebige Vorrichtung zur Strahltranslation, geschehen. Hierzu ist zum Beispiel eine rotierende schiefe Platte (Fig.3) zu nennen.

Falls eine Anordnung eingesetzt wird, bei der die durch das Festkörpermedium hindurchgeführte Strahlung über einen Reflektor in das Festkörpermedium zurückgeführt wird, kann eine weitere Optik (Linse) mit Abstand zu dem Reflektor angeordnet werden, mit der erreicht wird, dass bei einem mehrfachen Durchgang die Strahlparameter im Festkörpermedium reproduziert werden.

Um ohne einen Reflektor eine von der Ablenkeinrichtung unabhängige Strahlposition in einem Abstand von der zweiten Optik sicherzustellen, sollte nach dem Festkörpermedium eine zweite Optik angeordnet werden.

An der von der Ablenkeinrichtung unabhängigen Strahlposition kann eine weitere Ablenkeinrichtung angeordnet werden, die den transversalen, zeitabhängigen Versatz der ersten Ablenkeinrichtung rückgängig macht. Diese weitere Ablenkeinrichtung kann so ausgelegt werden, dass die Ausbreitungsrichtung der Strahlung von der ersten Ablenkeinrichtung unabhängig ist.

Bei einer Anordnung, die einen Reflektor einsetzt, wie sie vorstehend erwähnt ist, kann eine weitere optische Anordnung (4f-Abbildung) eingesetzt werden, die durch die folgende Strahltransformationsmatrix charakterisiert ist:

$$\begin{pmatrix} -1 & 0 \\ 0 & -1 \end{pmatrix}$$

wobei diese weitere optische Anordnung (Matrix) am Ort des bewegten Spiegels angeordnet ist. Mit einer solchen Anordnung kann auf einfache Weise ein Mehrfachdurchgang durch das Festkörpermedium realisiert werden, bei dem die Strahlparameter bei jedem Durchgang durch das Festkörpermedium reproduziert werden.

Wenn eine schiefe Platte zur Strahlablenkung genutzt wird, kann ebenfalls eine weitere optische Anordnung eingesetzt werden, die durch die folgende Strahltransformationsmatrix charakterisiert ist:

$$\begin{pmatrix} -1 & 0 \\ 0 & -1 \end{pmatrix}$$

wobei in diesem Fall der weitere Reflektor in ungefähr einem Abstand, der einer Brennweite (Abstand f der weiteren Optik (Linse) zu dem Reflektor) entspricht, angeordnet ist.

Weitere Einzelheiten und Merkmale der Erfindung ergeben sich aus der nachfolgenden Beschreibung von Ausführungsbeispielen anhand der Zeichnungen. In der Zeichnung zeigen

| | |
|---|---|
| Figuren 1Aa bis 1Ad | verschiedene erfindungsgemäße Anordnungen mit einer Ablenkeinrichtung, wobei die Figuren 1Ab bis 1Ad jeweils Variationen gegenüber der Grundanordnung der Figur 1A zeigen, |
| Figuren 1Ba bis 1Bd | die jeweiligen Anordnungen der Figuren 1Aa bis 1Ad, jeweils mit einer Spiegelung der Anordnungen entlang einer Spiegelebene, die in die Mitte des Festkörpermediums gelegt ist, |
| Figuren 2Aa bis 2Ad | Anordnungen entsprechend den Figuren 1Aa bis 1Ad, allerdings mit gegenüber den Figuren 1Aa bis 1Ad geändertem Abstand zwischen Linse und Reflexionsspiegel, |
| Figuren 2Ba bis 2Bd | die entsprechenden Anordnungen der Figuren 2Aa bis 2Ad, wiederum um eine Spiegelachse, die durch das Festkörpermedium führt, gespiegelt, |
| Figuren 3Aa bis 3Ac | Anordnungen, bei denen für den Strahlversatz eine schiefe Platte eingesetzt ist, wobei die Abfolgen der Figuren 3Aa bis 3Ac jeweils Variationen gegenüber der Grundanordnung der Figur 3A darstellen, |
| Figuren 3Ba bis 3Bc | die Anordnungen entsprechend der Figuren 3Aa bis 3Ac, wiederum um eine Spiegelachse, die durch das Festkörpermedium führt, gespiegelt, |
| Figur 3C | eine Anordnung, die derjenigen der Figuren 3Aa bis 3Ac entspricht, allerdings mit einer weiteren |

Optik (Linse), die mit Abstand zu dem Reflektor angeordnet ist,

| | |
|---|---|
| Figur 4A | eine Anordnung, die mit derjenigen der Figur 3C vergleichbar ist, allerdings mit einer weiteren optischen Anordnung zur einfachen Realisierung eines Mehrfachdurchgangs durch das Festkörpermedium, |
| Figur 4B und 4C | jeweils Anordnungen vergleichbar mit derjenigen der Figur 1A, und mit einer weiteren optischen Anordnung, und |
| Figur 4D | zwei Querschnitte des gepumpten Festkörpermediums. |

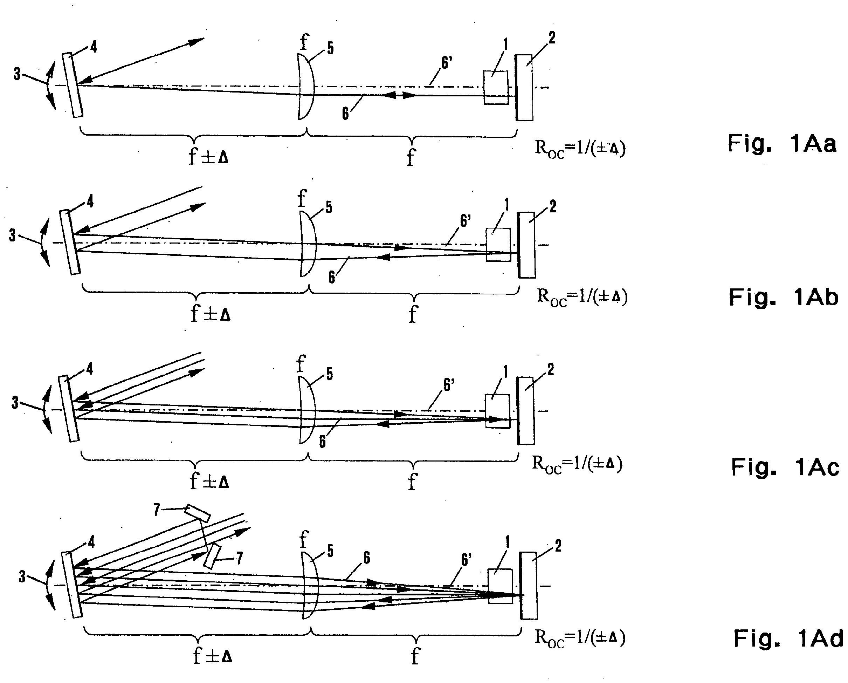

Die Anordnungen, wie sie in den Figuren 1Aa bis 1Ad dargestellt sind, umfassen jeweils ein feststehendes Festkörpermedium 1, das über eine nicht näher dargestellte

Pumpeinrichtung mittels Pumpstrahlung gepumpt wird. Die Anordnung umfasst einen in den Figuren auf der rechten Seite des Festkörpermediums 1 angeordneten feststehenden Reflektor 2 sowie auf der gegenüberliegenden Seite des Festkörpermediums 1 eine in Richtung des Schwenkpfeils 3 (es ist aber auch jede andere Kippbewegung möglich) bewegbare Ablenkeinrichtung, im vorliegenden Fall ein Spiegel (Scanner) 4. Zwischen Reflektor 2 und bewegbarem Spiegel 4 befindet sich eine Abbildungsoptik 5, die in einem Abstand f sowohl zu dem bewegbaren Spiegel 4 als auch zu dem feststehenden Reflektor 2 positioniert ist. Die strichpunktierte Linie 6' gibt die Achse der Anordnung an, während die durchgezogene Linie 6 sowohl die Laser- als auch die Pumpstrahlung angibt, die in den zeichnerischen Darstellungen übereinander liegen. Mit dem Spiegel bzw. Scanner 4 werden die Pumpstrahlung 6 und der Laserstrahl 6 quer zur Ausbreitungsrichtung (transversal) versetzt, wobei im Wesentlichen deren Ausbreitungsrichtung beibehalten wird. Die Abbildungsoptik 5 bzw. 9 bewirkt, dass eine Abtastbewegung des bewegbaren Spiegels bzw. Scanners 4 bzw. 10 zusammen mit der Abbildungsoptik 5 bzw. 9 in eine Translation in dem Festkörpermedium 1 umgewandelt wird, so dass der Auftreffwinkel der Laserstrahlung am Ort des Festkörpermediums konstant ist. Durch entsprechende Auslegung der Anordnung wird dann bei einem erneuten Durchlaufen der Abbildungsoptik durch Reflexion an dem Reflektor 2 eine Rücktransformation erreicht, die zu einer Winkelablenkung führt. Wird der Strahl durch denselben Scanner erneut abgelenkt, dann wird dann durch diesen Scanner die Strahlablenkung rückgängig gemacht. Aufgrund einer solchen Abbildung besitzt jeder beliebige Strahl 6, der auf den Scanner 4 auftrifft, bei der erneuten Ablenkung durch den Scanner 4 eine von diesem unabhängige Strahllage und Strahlausbreitung, und somit erfolgt eine telezentrische Abbildung dieser Strahlen 6 aufeinander; diese Abbildung ist von der transversalen Strahllage unabhängig.

Im Vergleich zu Figur 1Aa zeigt Figur 1Ab den Fall, bei dem die Laserstrahlung nicht in der Bewegungsachse, sondern seitlich versetzt auf den Scanner 4 trifft, was eine einfache Trennung des ein- und auslaufenden Laserstrahls ermöglicht.

Figur 1Ac zeigt die Anordnung, bei der die Pumpstrahlung ebenfalls versetzt zur Laserstrahlung auf den Scanner 4 trifft.

Schließlich zeigt Figur 1Ad einen Aufbau, entsprechend den Figuren 1Aa bis 1Ac, bei dem zusätzlich mehrere Faltungsspiegel 7 eingesetzt sind, so dass ein Mehrfachdurchgang erreicht wird.

In den Figuren ist der Abstand f zwischen Abbildungsoptik 5 und Scanner 4 mit $f \pm \Delta$ bezeichnet. Durch die geeignete Wahl von "$\Delta$" wird ein Taumeln der aus der Anordnung austretenden Laserstrahlen aufgrund einer thermischen Linse in dem Festkörpermedium 1 vermieden. Dies kann aber auch in entsprechender Weise durch eine Linse vor bzw. hinter dem Festkörpermedium 1 erreicht werden, plus einem $\Delta$, das von dem Festkörpermedium abhängig ist. Es ist anzumerken, dass bei allen Durchgängen durch das Festkörpermedium 1 der Modenradius ungefähr gleich ist, wenn der Eingangsstrahl kollimiert ist.

Die Gleichung $R_{OC} = 1/(\pm\Delta)$ in den Figuren bezeichnet die Krümmung $R_{OC}$ des planaren Spiegels 2, der allerdings nicht immer zwingend plan bzw. eben sein muss, so dass eine Kompensation um einen Betrag "$\pm\Delta$", z. B. eines radialen thermischen Gradienten im Festkörpermedium, genutzt werden kann.

Es ist darauf hinzuweisen, dass in den verschiedenen Figuren Bauteile, soweit sie in den einzelnen Figuren identisch oder in ihrer Funktionsweise mit anderen Ausführungsformen vergleichbar sind, mit denselben Bezugszeichen bezeichnet sind, so dass die entsprechenden Ausführungen zu einer Figur, das entsprechende Bauteil betreffend, auf die anderen Figuren übertragen werden können, ohne dass diese Bauteile zu den anderen Figuren gesondert beschrieben sind.

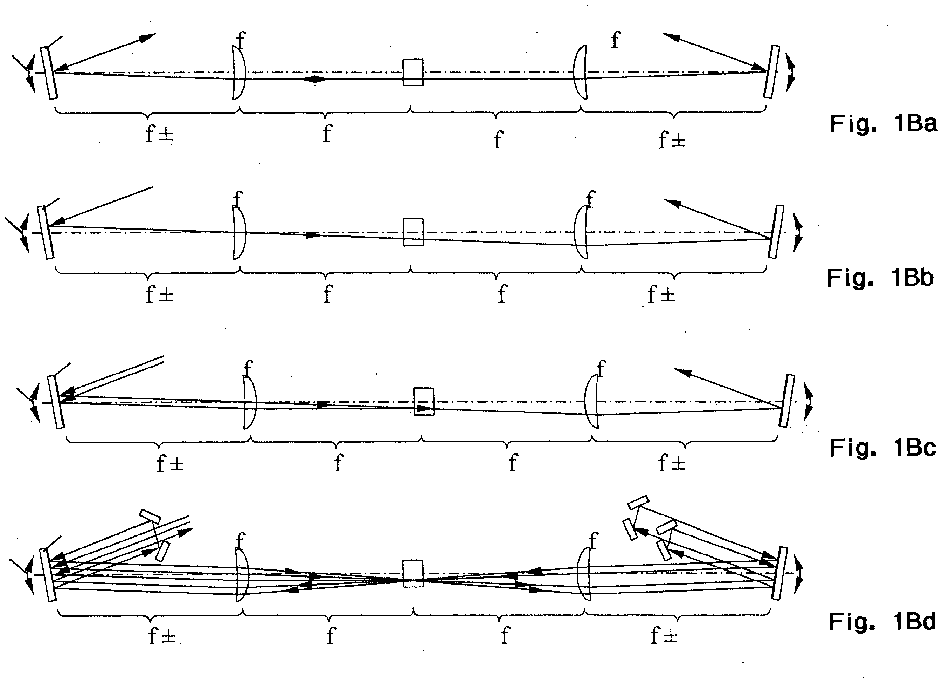

In den Figuren 1Ba bis 1Bd sind Anordnungen gezeigt, die mit denjenigen der Figuren 1Aa bis 1Ad vergleichbar sind; allerdings sind die jeweiligen Anordnungen der Figuren 1Aa bis 1Ad in den Figuren 1Ba, 1Bd um eine Spiegelebene 8 gespiegelt, die in der Mitte des feststehenden Festkörpermediums 1 liegt. Somit ist nach dem Festkörpermedium 1, auf der rechten Seite in den Figuren 1Ba bis 1Bd, eine zweite Abbildungsoptik 9 angeordnet, und zwar in einem Abstand f zu dem Festkörpermedium 1, zu der dann ein weiterer, bewegbarer Spiegel bzw. Scanner 10 angeordnet ist. Mit der zweiten Abbildungsoptik 9 wird eine von der zweiten Ablenkeinrichtung 10 unabhängige Strahlposition in einem Abstand

f $\pm\Delta$ von der zweiten Abbildungsoptik 9 sichergestellt. Die zweite Ablenkeinrichtung 10 macht den transversalen, zeitabhängigen Versatz der ersten Ablenkeinrichtung 4 rückgängig.

Zu den Figuren 1Bb, 1Bc und 1Bd ist darüber hinaus anzumerken, dass eine räumliche Trennung der Laser- und Pumpstrahlung sowie ein Mehrfachdurchgang mit Hilfe der Umlenkspiegel 7 durch einen räumlichen Versatz des Auftreffpunktes auf dem Scanner 4 realisiert werden kann.

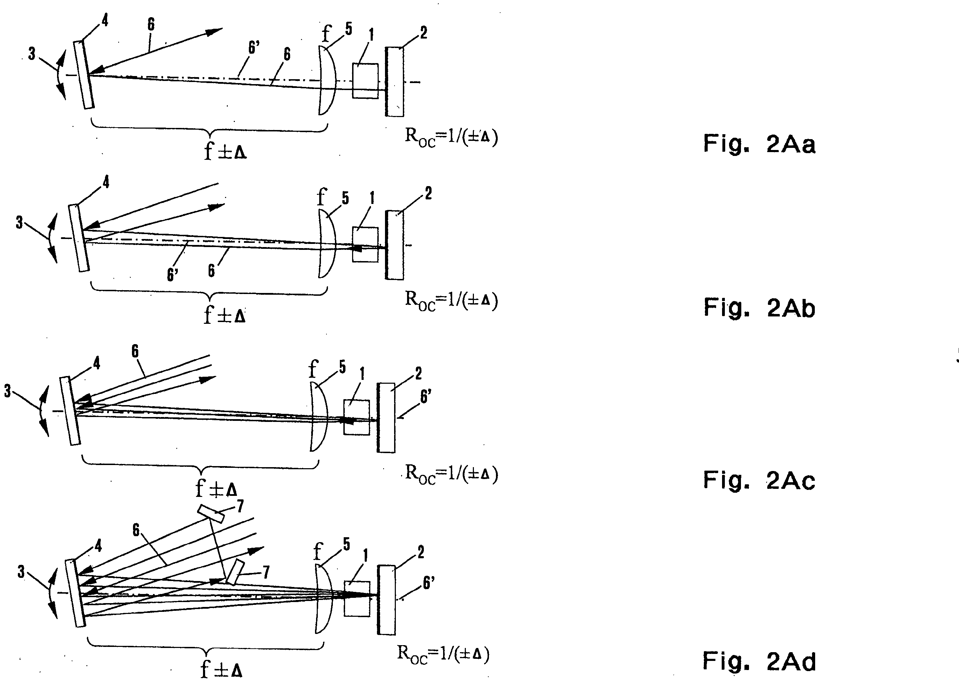

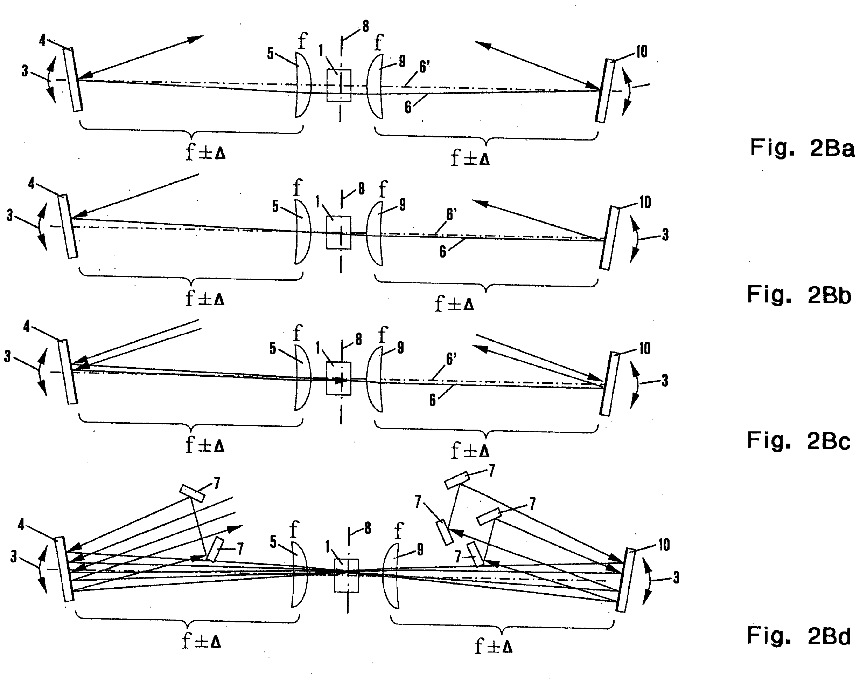

In den Figuren 2Aa bis 2Ad, die in der grundsätzlichen Anordnung der einzelnen Bauteile den Figuren 1Aa bis 1Ad entsprechen, ist der Abstand zwischen Abbildungsoptik 5 und feststehendem Reflektor 2 geändert. Gegenüber den Ausführungsformen der Figuren 1Aa bis 1Ad sind dadurch die ein- und austretenden Strahlen vor bzw. hinter dem Scanner 4 nicht mehr zwingend parallel.

Gleiches gilt für die Figuren 2Ba bis 2Bd, die grundsätzlich gespiegelte Anordnungen der Figuren 2Aa und 2Ad, vergleichbar auch mit solchen der Figuren 1Ba bis 1Bd, zeigen.

Solche Anordnungen sollten immer dann eingesetzt werden, wenn z.B. aufgrund der Zerstörung der Optiken durch hohe Intensitäten der Laserstrahlung ein großer Strahldurchmesser bei großen Laserstrahldurchmessern am Ort der Optiken im Festkörpermedium erreicht werden muss.

In den Figuren 3Aa bis 3Ac, aber auch in der Figur 3C, ist jeweils eine schiefe Platte 11 anstelle des kippbaren Spiegels bzw. Scanners 4 in den vorherigen Ausführungsformen eingesetzt. Mit dieser schiefen Platte 11 wird ein Strahlversatz des ankommenden Strahls 6 (wiederum sind in Fig. 3Aa, 3Ab Laser- und Pumpstrahlung übereinander liegend mit der durchgezogenen Linie 6 dargestellt) hervorgerufen; dieser Strahl 6 wird nach der Reflexion an dem feststehenden Reflektor 2 in die schiefe Platte 11 zurückgeführt und der Strahlversatz so rückgängig gemacht, dass sich ein ortsfester Strahl ergibt.

Mit dem Drehpfeil 12 ist angedeutet, dass sich die schiefe Platte bevorzugt um die optische Achse dreht; es ist aber auch jede andere Kippbewegung der Platte realisierbar.

Die Figuren 3Ba bis 3Bc zeigen Anordnungen, die mit denjenigen der Figuren 3Aa bis 3C vergleichbar sind; allerdings sind in den Figuren 3Ba bis 3Bc die entsprechenden Anordnungen der Figuren 3Aa bis 3Ac um eine Spiegelachse 8, die mittig durch das Festkörpermedium 1 führt und senkrecht zu der Achse 6' liegt, gespiegelt. Entsprechend ist auf der gespiegelten Seite jeweils eine weitere schiefe Platte 13 angeordnet. Mit dieser weiteren schiefen Platte 13 wird der Strahlversatz der Platte 11 rückgängig gemacht, so dass sich wiederum ein ortsfester austretender Strahl ergibt Die Anordnung der Figur 3C entspricht derjenigen, wie sie in Figur 1Ad gezeigt ist, d. h. mit mehreren zusätzlichen Faltungsspiegeln 7.

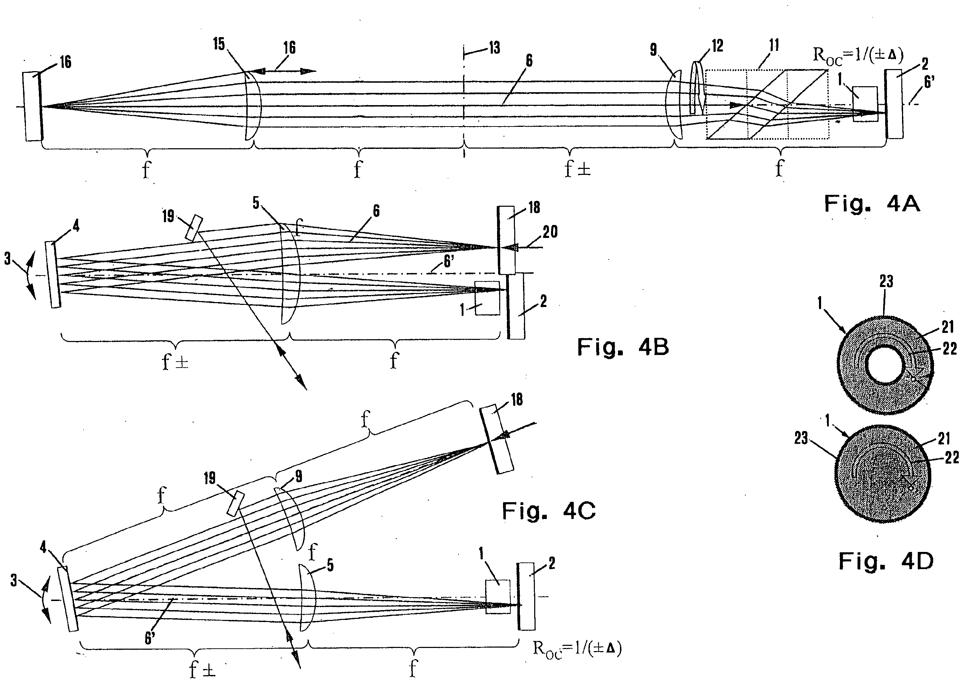

In Figur 4A nun ist eine Anordnung gezeigt, bei der um eine Spiegelebene 13 herum, ausgehend von einer Anordnung, wie sie in den Figuren 3Aa bis 3Ac und 3C gezeigt ist, eine weitere Abbildungsoptik 15 in einem Abstand f von der Spiegelebene 13 sowie ein weiterer Reflektor 16 von der weiteren Abbildungsoptik 15 angeordnet sind. Dieser weitere Reflektor 16 ist durch die Strahltransformationsmatrix

$$\begin{pmatrix} -1 & 0 \\ 0 & -1 \end{pmatrix}$$

charakterisiert. Mit dem Doppelpfeil 17 ist die ein- und austretende Laserstrahlung angedeutet.

In den Figuren 4B und 4C sind Anordnungen gezeigt, bei denen ein weiterer Reflektor 18 eingesetzt ist sowie ein Umlenkspiegel 19 vorgesehen sind, mit dem die Laserstrahlung ein- und ausgekoppelt wird. Dieser weitere Reflektor 18 ist zusammen mit der Abbildungsoptik 5 bzw. 9 durch die folgende Strahltransformationsmatrix charakterisiert:

$$\begin{pmatrix} -1 & 0 \\ 0 & -1 \end{pmatrix}$$

Die Anordnung der Figur 4B hat, gegenüber der Anordnung nach Figur 4A, den Vorteil der sehr kompakten Anordnung. Dagegen hat die Anordnung der Figur 4C, gegenüber der Anordnung nach Figur 4B den Vorteil, der größeren Justagefreiheit bei ebenfalls kompakten Abmaßen. In den Figuren 4B und 4C ist mit dem Pfeil 20 die Pumpstrahlung bezeichnet.

In der Figur 4D sind zwei Querschnitte des gepumpten Festkörpers 1 dargestellt, mit einem ringförmigen Aufbau in der oberen Darstellung und einem gefüllten Volumen in der unteren Darstellung. Das gepumpte Volumen ist mit dem Bezugszeichen 21 bezeichnet und der Pfeil 22 deutet die Rotation bzw. den Versatz der Pumpstrahl an, wodurch eine bessere Kühlung erreicht wird. Auf der Außenseite sind die jeweiligen Festkörpermedien 1 mit einer Kühlfläche 23 versehen.

Die Anordnung in den Figuren 4B und 4C dient zur breitbandigen Verstärkung von abstimmbaren oder fs-Laserstrahlquellen. Als Verstärkungsmedium dient ein Ti:Saphir- Laser der mit einem gepulsten, frequenzverdoppelten Nd:YAG-Laser (532nm) gepumpt wird. Das gepumpte Volumen wird mit einem Piezo-Scanner oder einem leicht geneigten rotierenden Spiegel auf einer Kreisbahn durch das mit Wasser gekühlte Verstärkungsmedium bewegt. Durch die Abbildung mit Achromat 1 (5) in einem Brennweiten-Abstand zu Scanner 4 und Verstärkungsmedium trifft die Pumpstrahlung immer senkrecht auf den Ti:Saphir Laserkristall. Die beiden Achromaten bewirken eine telezentrische 4f-Abbildung des Laserkristalls und des Endspiegels aufeinander. Der Endspiegel ist etwas gegen die optische Achse geneigt. Dadurch ändert sich der Reflexionswinkel der eingekoppelten zu verstärkenden Strahlung bei jedem Umlauf um einen konstanten Betrag, jedoch bleibt die Strahllage auf dem Endspiegel und dem Laserkristall durch die 4f-Abbildung konstant. Durch die Winkeländerung bei jedem Umlauf kann entweder - wie im gezeigten Beispiel - die zu verstärkende Strahlung mehrfach durch den Kristall laufen und auf demselben Weg ein- und ausgekoppelt werden oder kann durch eine Verkippung der zu verstärkenden Strahlung in $\gamma$-Richtung an verschiedenen Orten ein- und ausgekoppelt werden.

Die bevorzugte Ablenkrate $\nu$ ist mit der Bahngeschwindigkeit V = $\nu \cdot$s der zeitabhängig abgelenkten Strahlung verknüpft. Dabei ist s die Länge der im Festkörpermedium beschriebenen Trajektorie und $\nu$ die Frequenz, mit der diese Trajektorie beschrieben wird.

Damit durch die Bewegung der Pumpstrahlung die Ausbildung thermischer Gradienten im Festkörpermedium unterdrückt wird, sollte die Verweildauer 2w/V der Pumpstrahlung mit Radius w an einem Ort des Festkörpermediums kleiner sein als die charakteristische Ausbildungszeit $\tau_t$ = 1/2,4.$w^2/\kappa$ einer thermischen Linse, wobei $\kappa$ Temperaturleitfähigkeit des Festkörpermediums angibt. Das bedeutet 2w/V << 1/2,4$\cdot w^2/\kappa$ und damit $\nu$>>$\nu_{min}$ = 4,8$\kappa$/w/s.

Handelt es sich bei dem Festkörpermedium um ein Material mit einer charakteristischen Speicherdauer, beispielsweise einen Laserkristall mit einer Lebensdauer des angeregten Laserniveaus $\tau_t$, so ist die Ablenkrate nach oben beschränkt: $\nu$<<$\nu_{max}$= 2w/s/$\tau_l$. Dabei ist w der Strahlradius der Pump- und Laserstrahlung bzw. der frequenzkonvertierten Pumpstrahlung.

Beispiele sind:

Für Ti:Saphir mit einer Trajektorienlänge s = 30mm und Strahlradius w = 50$\mu$m, $\tau_l$ = 3$\mu$s und $\kappa$=13 $10^{-6}m^2s^{-1}$ ergibt sich $\nu_{min}$ = 42Hz<<$\nu$<<1100Hz=$\nu_{max}$.

Für Nd:YAG mit einer Trajektorienlänge s = 50mm und Strahlradius w = 500$\mu$m, $\tau_l$ = 210$\mu$s und $\kappa$ = 4,6$\cdot 10^{-6}m^2s^{-1}$ ergibt sich $\nu_{min}$ = 0,88Hz<<$\nu$<<95Hz = $\nu_{max}$.

**Patentansprüche**

1. Anordnung mit einem feststehenden Festkörpermedium, das über eine Pumpeinrichtung mittels Pumpstrahlung gepumpt wird, wobei die Pumpstrahlung über eine erste Ablenkeinrichtung in das Festkörpermedium eingestrahlt wird, um dadurch Laserstrahlung zu verstärken oder in der Frequenz zu konvertieren, und die erste Ablenkeinrichtung (4, 10, 11, 13) die Strahlung (6), bestehend aus der Pumpstrahlung und der Laserstrahlung, oder die Strahlung in Form der frequenzkonvertierten Pumpstrahlung, unter Beibehaltung deren Ausbreitungsrichtungen, versetzt, **dadurch gekennzeichnet, dass** die Strahlung im Bereich von zehn bis einigen hundert Hertz transversal quer zu deren Ausbreitungsrichtungen zeitabhängig zur Verkleinerung thermischer Gradienten und zur Verringerung der Temperaturen im Lasermedium versetzt wird und dass für Festkörpermedien die Frequenz $\nu$, mit der die Strahlung transversal zeitabhängig versetzt wird, durch die Vorschrift 2w/V < 1/2,4$\cdot w^2/\kappa$ und damit $\nu$>$\nu_{min}$ = 4,8$\kappa$/w/s bestimmt ist, wobei 2w/V die Verweildauer ist, w der Radius der Pumpstrahlung an einem Ort des Festkörpermediums ist, V die Bahngeschwindigkeit der zeitabhängig abgelenkten Strahlung ist, s die Länge der im Festkörpermedium beschriebenen Trajektorie und $\kappa$ die Temperaturleitfähigkeit des Festkörpermediums ist.

2. Anordnung nach Anspruch 1, **dadurch gekennzeichnet, dass** die Beibehaltung der Ausbreitungsrichtung zumindest der Laserstrahlung durch eine zwischen Ablenkeinrichtung (4, 11) und Festkörpermedium (1) angeordnete, erste Optik (5) vorgenommen wird.

3. Anordnung nach Anspruch 1 oder 2, **dadurch gekennzeichnet, dass** die Ablenkeinrichtung durch einen bewegten Spiegel (4, 10), insbesondere durch einen Scanner, gebildet ist.

4. Anordnung nach einem der Ansprüche 1 bis 3, **dadurch gekennzeichnet, dass** die durch das Festkörpermedium (1) hindurchgeführte Strahlung (6) über einen Reflektor (2, 18) in das Festkörpermedium (1 zurückgeführt wird.

5. Anordnung nach Anspruch 2 oder 4, **dadurch gekennzeichnet, dass** sich diese, am Ort der Ablenkeinrichtung gesehen, wie eine Strahltransfermatrix verhält, die charakterisiert ist durch

$$\begin{pmatrix} -1 & 0 \\ C & -1 \end{pmatrix}$$

für eine Reflexion mit Strahlinversion,
wobei C beliebig gewählt werden kann.

6. Anordnung nach einem der Ansprüche 1 bis 5, **dadurch gekennzeichnet, dass** nach dem Festkörpermedium (1) eine zweite Optik (9) angeordnet ist, die eine von der Ablenkeinrichtung (10, 11) unabhängige Strahlposition in einem Abstand von der zweiten Optik (9) sicherstellt.

7. Anordnung nach Anspruch 1 oder 4, **dadurch gekennzeichnet, dass** an einem Ort, an dem die Strahlposition von der Ablenkeinrichtung (4; 11) unabhängig ist, eine weitere Ablenkeinrichtung (10; 13) angeordnet ist, die den transversalen, zeitabhängigen Versatz der ersten Ablenkeinrichtung (4; 11) rückgängig macht.

8. Anordnung nach Anspruch 7, **dadurch gekennzeichnet, dass** die weitere Ablenkeinrichtung (10; 13) so ausgelegt ist, dass die Ausbreitungsrichtung der Strahlung (6) von der ersten Ablenkeinrichtung (4; 11) unabhängig ist.

9. Anordnung nach Anspruch 4, **dadurch gekennzeichnet, dass** eine Abbildungsoptik (9) mit Abstand zu dem Reflektor (2, 18) angeordnet ist.

10. Anordnung nach Anspruch 4, **dadurch gekennzeichnet, dass** ein weiterer Reflektor (18) eingesetzt ist, der durch die folgende Strahltransfermatrix charakterisiert ist:

$$\begin{pmatrix} -1 & 0 \\ 0 & -1 \end{pmatrix}$$

wobei dieser weitere Reflektor (18), charakterisiert durch diese Strahltransfermatrix, am Ort des bewegten Spiegels angeordnet ist.

11. Anordnung nach Anspruch 9, **dadurch gekennzeichnet, dass** ein weiterer Reflektor (18) eingesetzt ist, der durch die folgende Strahltransfermatrix charakterisiert ist:

$$\begin{pmatrix} -1 & 0 \\ 0 & -1 \end{pmatrix}$$

wobei dieser weitere Reflektor (18) in ungefähr einem Abstand, der einer Brennweite der Abbildungsoptik (9) entspricht, angeordnet ist.

12. Anordnung nach Anspruch 1, **dadurch gekennzeichnet, dass** zur Verringerung der thermischen Effekte das gepumpte Volumen im Festkörpermedium, insbesondere durch Bewegung des gepumpten Volumens durch Rotation auf einer Kreisbahn, bewegt wird.

**Claims**

1. Arrangement with a fixed solid-state medium which is pumped by means of pumping radiation via a pumping device, the pumping radiation being irradiated into the solid-state medium via a first deflector so as to intensify laser radiation or convert it in the frequency, and the first deflector (4, 10, 11, 13) displacing the radiation (6), consisting of the pumping radiation and the laser radiation, or the radiation in the form of frequency-converted pumping radiation, while maintaining the propagation directions thereof, **characterized in that** the radiation is displaced in the range of ten to several hundred Hertz transversally in a direction transverse to the propagation directions thereof in a time-dependent manner to reduce thermal gradients and to reduce the temperatures in the laser medium, and that for solid-state media the frequency $\nu$ with which the radiation is displaced transversally in time-dependent manner is determined by the rule $2w/V < 1/2.4 \cdot w^2/\kappa$ and thus $\nu > \nu = 4.8\kappa/w/s$, wherein $2w/V$ is the dwell time, w is the radius of the pumping radiation at a place of the solid-state medium, V is the path velocity of the radiation deflected in time-dependent manner, s is the length of the trajectory described in the solid-state medium, and $\kappa$ is the temperature conductivity of the solid-state medium.

2. Arrangement according to claim 1, **characterized in that** the maintenance of the direction of propagation of at least the laser radiation is carried out by a first optics (5) arranged between deflector (4, 11) and solid-state medium (1).

3. Arrangement according to claim 1 or 2, **characterized in that** the deflector is formed by a moving mirror (4, 10), in particular by a scanner.

4. Arrangement according to one of claims 1 to 3, **characterized in that** the radiation (6) passed through the solid-state medium (1) is returned into the solid-state medium (1) via a reflector (2, 18).

5. Arrangement according to claim 2 or 4, **characterized in that**, seen at the location of the deflector, it behaves like a beam transfer matrix **characterized by**

$$\begin{pmatrix} -1 & 0 \\ C & -1 \end{pmatrix}$$

for a reflection with beam inversion,
where C can be selected as desired.

6. Arrangement according to one of claims 1 to 5, **characterized in that** a second optics (9) is arranged after the solid-state medium (1), which ensures a beam position independent of the deflector (10, 11) at a distance from the second optics (9).

7. Arrangement according to claim 1 or 4, **characterized in that** at a location at which the beam position is independent of the deflector (4; 11), a further deflector (10; 13) is arranged which reverses the transversal, time-dependent offset of the first deflector (4; 11).

8. Arrangement according to claim 7, **characterized in that** the further deflector (10; 13) is designed such that the direction of propagation of the radiation (6) is independent of the first deflector (4; 11).

9. Arrangement according to claim 4, **characterized in that** an imaging optics (9) is arranged at a distance from the reflector (2, 18).

10. Arrangement according to claim 4, **characterized in that** a further reflector (18) is used which is **characterized by** the following beam transfer matrix:

$$\begin{pmatrix} -1 & 0 \\ 0 & -1 \end{pmatrix}$$

wherein said further reflector (18), **characterized by** said beam transfer matrix, is arranged at the location of the moving mirror.

11. Arrangement according to claim 9,
**characterized in that** a further reflector (18) is used which is **characterized by** the following beam transfer matrix:

$$\begin{pmatrix} -1 & 0 \\ 0 & -1 \end{pmatrix}$$

wherein said further reflector (18) is arranged approximately at a distance corresponding to a focal length of the imaging optics (9).

12. Arrangement according to claim 1, **characterized in that** for reducing the thermal effects the pumped volume in the solid-state medium is moved, particularly by movement of the pumped volume by rotation on a circular path.

**Revendications**

1. Agencement avec un milieu à l'état solide qui est pompé via un dispositif de pompage au moyen d'un rayonnement de pompage, dans lequel le rayonnement de pompage est irradié dans le milieu à l'état solide via un premier dispositif de déviation pour ce faisant renforcer un rayonnement laser ou le convertir dans la fréquence, et le premier dispositif de déviation (4, 10, 11, 13) décale le rayonnement (6), constitué du rayonnement de pompage et du rayonnement laser, ou le rayonnement sous la forme du rayonnement de pompage converti dans la fréquence, tout en conservant ses directions de propagation, **caractérisé en ce que** le rayonnement est décalé dans la plage de dix à quelques centaines de hertz transversalement par rapport à ses directions de propagation en fonction du temps en vue de réduire des gradients thermiques et de diminuer des températures dans le milieu laser, et **en ce que** pour des milieux à l'état solide, la fréquence $\nu$, avec laquelle le rayonnement est décalé transversalement en fonction du temps, est déterminée par la règle $2w/V < 1/2,4 \cdot w^2/\kappa$ et ce faisant $\nu > \nu_{min} = 4,8\kappa/w/s$, dans lequel $2w/V$ est la durée de séjour, w est le rayon du rayonnement de pompage en un endroit du milieu à l'état solide, V est la vitesse du rayonnement dévié en fonction du temps, s est la longueur de la trajectoire décrite dans le milieu à l'état solide, et $\kappa$ est la conductivité thermique du milieu à l'état solide.

2. Agencement selon la revendication 1, **caractérisé en ce que** la conservation des directions de propagation d'au moins le rayonnement laser est réalisée par un premier système optique (5) agencé entre le premier dispositif de déviation (4, 11) et le milieu à l'état solide (1).

3. Agencement selon la revendication 1 ou 2, **caractérisé en ce que** le dispositif de déviation est formé par un miroir mobile (4, 10), en particulier par un scanner.

4. Agencement selon l'une quelconque des revendications 1 à 3, **caractérisé en ce que** le rayonnement (6) guidé à travers le milieu à l'état solide (1) est ramené dans le milieu à l'état solide (1) via un réflecteur (2, 18).

5. Agencement selon la revendication 2 ou 4, **caractérisé en ce que** celui-ci se comporte, considéré depuis l'endroit du dispositif de déviation, comme une matrice de transfert de rayonnement, qui est **caractérisée par**

$$\begin{pmatrix} -1 & 0 \\ C & -1 \end{pmatrix}$$

pour une réflexion avec inversion de rayonnement,
où C peut être décidé au choix.

6. Agencement selon l'une quelconque des revendications 1 à 5, **caractérisé en ce qu'**après le milieu à l'état solide (1) est agencé un second système optique (9) qui assure une position de rayonnement indépendante du dispositif de déviation (10, 11) à une certaine distance du second système optique (9).

7. Agencement selon la revendication 1 ou 4, **caractérisé en ce qu'**en un endroit où la position de rayonnement est indépendante du dispositif de déviation (4 ; 11) est agencé un autre dispositif de déviation (10 ; 13) qui rend réversible le décalage transversal en fonction du temps du premier dispositif de déviation (4 ; 11).

8. Agencement selon la revendication 7, **caractérisé en ce que** l'autre dispositif de déviation (10 ; 13) est conçu de sorte que la direction de propagation du rayonnement (6) est indépendante du premier dispositif de déviation (4 ; 11).

9. Agencement selon la revendication 4, **caractérisé en ce qu'**une optique d'imagerie (9) est agencée à une certaine distance du réflecteur (2, 18).

**10.** Agencement selon la revendication 4, **caractérisé en ce qu'**un autre réflecteur (18) est inséré qui est **caractérisé par** la matrice de transfert de rayonnement suivante :

$$\begin{pmatrix} -1 & 0 \\ 0 & -1 \end{pmatrix}$$

où cet autre réflecteur (18), **caractérisé par** cette matrice de transfert de rayonnement, est agencé à l'endroit du miroir mobile.

**11.** Agencement selon la revendication 9,
**caractérisé en ce qu'**un autre réflecteur (18) est inséré qui est **caractérisé par** la matrice de transfert de rayonnement suivante :

$$\begin{pmatrix} -1 & 0 \\ 0 & -1 \end{pmatrix}$$

où cet autre réflecteur (18) est agencé à environ une distance qui correspond à une distance focale de l'optique d'imagerie (9).

**12.** Agencement selon la revendication 1, **caractérisé en ce que** pour diminuer les effets thermiques le volume pompé dans le milieu à l'état solide est mis en mouvement, en particulier par le mouvement du volume pompé par rotation sur une trajectoire circulaire.

Fig. 1Aa

Fig. 1Ab

Fig. 1Ac

Fig. 1Ad

$R_{OC}=1/(\pm\Delta)$

EP 2 084 794 B1

Fig. 1Ba

Fig. 1Bb

Fig. 1Bc

Fig. 1Bd

$R_{OC} = 1/(\pm\Delta)$

**Fig. 2Aa**

$R_{OC} = 1/(\pm\Delta)$

**Fig. 2Ab**

$R_{OC} = 1/(\pm\Delta)$

**Fig. 2Ac**

$R_{OC} = 1/(\pm\Delta)$

**Fig. 2Ad**

EP 2 084 794 B1

Fig. 2Ba

Fig. 2Bb

Fig. 2Bc

Fig. 2Bd

Fig. 3Aa

Fig. 3Ab

Fig. 3Ac

Fig. 3C

Fig. 3Ba

Fig. 3Bb

Fig. 3Bc

EP 2 084 794 B1

Fig. 4A

Fig. 4B

Fig. 4C

Fig. 4D

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6888855 B1
- US 5233624 A1

- US 5233624 A